# EUROPÄISCHE PATENTSCHRIFT

(11) **EP 2 079 981 B1**
(45) Veröffentlichungstag und Bekanntmachung des Hinweises auf die Patenterteilung: **23.03.2016**
(21) Anmeldenummer: 07819227.5
(22) Anmeldetag: 16.10.2007
(51) Int. Cl.: G01B 11/25, G01C 11/06

(54) **VORRICHTUNG UND VERFAHREN ZUM BERÜHRUNGSLOSEN ERFASSEN EINER DREIDIMENSIONALEN KONTUR**
DEVICE AND METHOD FOR THE CONTACTLESS DETECTION OF A THREE-DIMENSIONAL CONTOUR
DISPOSITIF ET PROCÉDÉ POUR LA MESURE SANS CONTACT D'UN CONTOUR TRIDIMENSIONNEL

(30) Priorität: 16.10.2006 DE 102006049695
(43) Veröffentlichungstag der Anmeldung: 22.07.2009
(73) Patentinhaber: Fraunhofer-Gesellschaft zur Förderung der angewandten Forschung e.V., 80686 München (DE)
(72) Erfinder: PALME, Martin, 07745 Jena (DE); RIEHEMANN, Stefan, 07743 Jena (DE); KÜHMSTEDT, Peter, 07751 Jena (DE); BRÄUER-BURCHARDT, Christian, 99510 Apolda (DE); NOTNI, Gunther, 07749 Jena (DE)
(74) Vertreter: Pfenning, Meinig & Partner mbB
(86) Internationale Anmeldenummer: PCT/EP2007/009164
(87) Internationale Veröffentlichungsnummer: WO 2008/046663

(56) Entgegenhaltungen:
- WO-A-2006/094409
- DE-A1- 10 149 750
- DE-A1- 10 344 051
- DE-A1-102004 052 199
- US-A- 4 842 411
- US-A- 5 104 216
- US-A- 5 307 151
- US-A1- 2002 044 682
- US-A1- 2003 072 011
- MUNKELT C; KUHMSTEDT P; HEINZE M ET AL.: "How to detect object-caused illumination effects in 3D fringe projection" PROCEEDINGS OF SPIE, Bd. 5856, 13. Juni 2005 (2005-06-13), Seiten 632-639, XP002497006
- ZHANG S. AND YAU S-T.: "High-resolution, real-time 3D absolute coordinate measurement based on a phase-shifting method" OPTICS EXPRESS, Bd. 14, Nr. 7, 3. April 2006 (2006-04-03), Seiten 2644-2649, XP002497008
- SCHREIBER W ET AL: "THEORY AND ARRANGEMENTS OF SELF-CALIBRATING WHOLE-BODY THREE-DIMENSIONAL MEASUREMENT SYSTEMS USING FRINGE PROJECTION TECHNIQUE" OPTICAL ENGINEERING, SOC. OF PHOTO-OPTICAL INSTRUMENTATION ENGINEERS. BELLINGHAM, Bd. 39, Nr. 1, 1. Januar 2000 (2000-01-01), Seiten 159-169, XP001092868 ISSN: 0091-3286
- KUHMSTEDT P; BRAUER-BURCHARDT C; MUNKELT C ET AL.: "Intraoral 3D scanner" PROCEEDINGS OF THE SPIE, Bd. 6762, 26. September 2007 (2007-09-26), Seiten 67620E-1-67620E-9, XP002497007

## Beschreibung

Die vorliegende Erfindung betrifft eine Vorrichtung zum berührungslosen Erfassen einer dreidimensionalen Kontur mit einem Projektor und einer zwei Kameraobjektive umfassenden Kameraanordnung. Die Erfindung betrifft ferner ein entsprechendes Verfahren zum berührungslosen Erfassen einer dreidimensionalen Kontur, bei dem mindestens ein Streifenmuster auf ein Objekt projiziert wird.

Aus dem Stand der Technik ist es bekannt, bei vergleichbaren Verfahren zusammen mit dem Streifenmuster einen sog. Graycode auf das Objekt zu projizieren, der es ermöglicht, in Abbildungen des auf dem Objekt aufgenommenen Streifenmusters einzelne Linienpaare des Streifenmusters zu identifizieren und so zu bestimmten Objektpunkten gehörige Bildpunkte zu identifizieren, was ein Triangulieren zum Erfassen einer dreidimensionalen Kontur des Objekts ermöglicht. Ein Nachteil derartiger Verfahren nach dem Stand der Technik ist darin zu sehen, dass wegen der Projektion einer verhältnismäßig reichhaltigen Information auf das Objekt eine hohe Anzahl von Aufnahmen erforderlich ist. Das steht insbesondere einer Anwendung derartiger Verfahren in Handgeräten entgegen.

Aus den Druckschriften WO 2006/094409 A, US 2002/0044682 A1, und US 4 842 411 A sind bereits Vorrichtungen zum berührungslosen Erfassen dreidimensionaler Konturen bekannt. Eine kombinierte Verwendung von verschiebbaren Umlenkelementen mit einem gemeinsamen Kamerachip für zwei Kameraobjektive wird jedoch nicht offenbart. In der Veröffentlichung "How to detect object-caused illumination effects in 3D fringe projection" von Munkelt, Kühmstedt, Heinze et al. wird unter anderem ein Identifizieren einander entsprechender Punkte in verschiedenen Ansichten unter Verwendung der Phasenwerte erwähnt. Gleiches ist auch aus der Veröffentlichung "Theory and arrangements of self-calibrating whole-body three-dimensional measurements systems using fringe projection technique" von Schreiber und Notni bekannt.

Weitere Verfahren zur Triangulation, bei denen Streifen projiziert werden, sind aus den Druckschriften DE 101 49 750 A1, DE 10 2004 052 199 A1 und US 5 307 151 bekannt.

Der vorliegenden Erfindung liegt also die Aufgabe zugrunde, eine Vorrichtung und ein entsprechendes Verfahren zum berührungslosen Erfassen einer dreidimensionalen Kontur vorzuschlagen, die die genannten Nachteile vermeiden und, insbesondere im Hinblick auf eine intra-orale oder extraorale Erfassung von Zahnoberflächen oder Oberflächen von Zahnmodellen oder Zahnersatz, eine manuelle Handhabe zumindest eines verwendeten Messkopfs erlauben.

Diese Aufgabe wird erfindungsgemäß gelöst durch eine Vorrichtung mit den Merkmalen des Anspruchs 1 sowie durch ein Verfahren mit den Merkmalen des Anspruchs 7 . Vorteilhafte Ausgestaltungen und Weiterentwicklungen der Erfindung ergeben sich mit den Merkmalen der abhängigen Ansprüche. Insbesondere kann eine vorgeschlagene Vorrichtung oder eine gegebenenfalls von der Vorrichtung umfasste Steuer- und Auswerteeinheit programmtechnisch zur Durchführung des Verfahrens nach einem der Verfahrensansprüche eingerichtet sein.

Eine Konturerfassung im Handbetrieb wird durch die vorgeschlagene Vorrichtung zum berührungslosen Erfassen einer dreidimensionalen Kontur dadurch ermöglicht, dass diese einen Projektor mit einem bildgebenden Element und einem Projektionsobjektiv zum Abbilden eines auf dem bildgebenden Element generierbaren Streifenmusters in einen Objektraum sowie eine zwei Kameraobjektive umfassende Kameraanordnung zur Beobachtung des Objektraums aus zwei unterschiedlichen Richtungen umfasst, wobei der Projektor und die Kameraanordnung gemeinsam in einem als Handgerät verwendbaren Messkopf untergebracht sind.

Die Kameraanordnung weist einen gemeinsamen Kamerachip für beide Kameraobjektive auf, wobei jedes der Kameraobjektive ein Bild auf jeweils einer Hälfte des Kamerachips erzeugt. Das wiederum wird durch einen gefalteten Strahlengang erreichtdadurch, dass für jedes Kameraobjektiv zwei Umlenkspiegel vorgesehen werden. Bei dem Kamerachip kann es sich z.B. um einen CCD handeln.

Durch die Verwendung zweier Kameraobjektive wird ein Triangulieren eines Punktes im Objektraum auch dann möglich, wenn eine Projektionsrichtung einzelner Linienpaare des Streifenmusters a priori nicht genau bekannt ist. Es genügt vielmehr eine Identifizierung von Bildpunkten gleicher absoluter Phase. Um einerseits hinreichend präzise triangulieren zu können und andererseits auch steile Flanken vermessen zu können, können die Kameraobjektive vorteilhafterweise so angeordnet sein, dass sie optische Achsen haben, die einen Winkel von zwischen 5° und 20° einschließen. Mit Blick auf einen möglichst kompakten Aufbau und eine möglichst übersichtliche Triangulationsgeometrie ist es vorteilhaft, wenn die optischen Achsen der zwei Kameraobjektive spiegelsymmetrisch zu einer Ebene angeordnet sind, in der die optische Achse des Projektionsobjektivs liegt. Vorteilhafterweise können alle drei optischen Achsen in einer Ebene liegen. Es ist jedoch auch möglich, dass die optische Achse des Projektionsobjektivs um einen Winkel von 5° und 8° aus einer durch die optischen Achsen der Kameraobjektive aufgespannten Ebene herausgekippt ist.

Damit die Vorrichtung einerseits angenehm auch eine intraorale Vermessung erlaubt und andererseits sowohl hinreichend kompakt ist als auch ein hinreichend präzises Triangulieren ermöglicht, können die Kameraobjektive und/oder das Projektionsobjektiv eine objektseitige Schnittweite von zwischen 7 cm und 13 cm haben. Dabei kann vorgesehen sein, dass ein Strahlengang zwischen dem Objekt und den Kameraobjektiven oder dem Projektorobjektiv gefaltet ist, beispielsweise mit einem Umlenkspiegel oder zwei Umlenkspiegeln. Zumindest ein vorteilhafterweise mindestens 7 cm langes Gehäuseende des Messkopfs kann mit einer Höhe von weniger als 2,5 cm ausgelegt werden, um eine intra-orale Messung zu erlauben.

Die Vorrichtung kann ferner eine Lichtquelle für den Projektor aufweisen, die in dem Messkopf untergebracht oder über einen Lichtleiter mit dem Messkopf verbunden sein kann. Das bildgebende Element kann dabei so ausgeführt sein, dass es von dieser Lichtquelle ausgehendes Licht reflexiv oder transmissiv in seiner Intensität moduliert. Insbesondere kann es sich bei dem bildgebenden Element um einen LCoS-Chip oder einen üblichen LCD oder um ein anderes pixelweise ansteuerbares bildgebendes Element handeln. Die Vorrichtung kann schließlich ferner eine Steuer- und Auswerteeinheit zum Ansteuern des bildgebenden Elements und zum Auswerten von von der Kameraanordnung erzeugten Bilddaten umfassen. Die Steuer- und Auswerteeinheit kann dabei programmtechnisch eingerichtet sein zum Generieren mindestens eines Streifenmusters auf dem bildgebenden Element sowie zum Bewerten von mit der Kameraanordnung ermittelten Phasenwerten längs von einander entsprechenden Epipolarlinien in Bildebenen beider Kameraobjektive auf Stetigkeit ihres Verlaufs, zum Einteilen der Epipolarlinien in Intervalle stetigen Phasenverlaufs, zum Identifizieren einander entsprechender Intervalle in den einander entsprechenden Epipolarlinien, zum Identifizieren von einander entsprechenden Bildpunkten gleicher Phasenwerte innerhalb der miteinander korrespondierenden Intervalle und zum Triangulieren eines Objektpunkts auf Basis der diesem Objektpunkt entsprechenden, miteinander korrespondieren Bildpunkte. Die Steuer- und Auswerteeinheit ist dabei vorzugsweise ferner so auszubilden, dass eine Sequenz mehrerer zueinander phasenverschobener Streifenmuster und/oder zusätzlich mindestens ein Streifenmuster mit in eine andere Richtung orientierten Streifen generiert werden kann.

Das vorgeschlagene Verfahren zum berührungslosen Erfassen einer dreidimensionalen Kontur, das beispielsweise mit einer Vorrichtung zuvor beschriebener Art durchgeführt werden kann, sieht vor, dass mindestens ein Streifenmuster auf ein Objekt projiziert wird und mittels zweier in einem definierten Abstand zueinander angeordneter Kameraobjektive aus zwei verschiedenen Richtungen zwei Bilder des Objekts mit dem aufprojizierten Streifenmuster aufgenommen und für Bildpunkte in beiden Bildern Phasenwerte des Streifenmusters ermittelt werden, wonach durch Triangulieren auf Basis jeweils einander entsprechender Bildpunkte in den beiden Bildern eine Tiefeninformation für einen diesen Bildpunkten entsprechenden Objektpunkt ermittelt wird. Zur Ermittlung der einander entsprechenden Bildpunkte in den beiden Bildern werden dabei einander jeweils entsprechende Epipolarlinien in den beiden Bildern ausgewählt, und längs dieser Epipolarlinien werden die ermittelten Phasenwerte auf Stetigkeit bewertet und die Epipolarlinien damit in Intervalle stetigen Phasenverlaufs eingeteilt. Das kann beispielsweise durch an sich bekannte Verstetigungsalgorithmen geschehen, z.B. indem Phasenwerte, die mit zueinander benachbarten Pixeln aufgenommen wurden, daraufhin überprüft werden - ggf. bei einer Betrachtung der Phasenwerte modulo 2n -, ob sie um nicht mehr als einen definierten kleinen Wert differieren. Schließlich werden die einander entsprechenden Intervalle in den einander entsprechenden Epipolarlinien identifiziert, was beispielsweise durch Vergleich der Anzahl von in den verschiedenen Intervallen enthaltenen Perioden geschehen kann, und innerhalb der einander entsprechenden Intervalle Punkte gleicher Phasenwerte einander zugeordnet. Das wiederum ist jetzt problemlos möglich, weil die Phasenwerte innerhalb der genannten Intervalle verstetigt sind. So können auch die Phasenwerte vor deren Bewertung auf Stetigkeit als Rohphasenwerte bezeichnet werden, die - bei einer Parametrisierung einer Periode von 0 bis 2n - nur einen Aussagegehalt modulo 2n haben, während die Phasenwerte nach der Einteilung der Epipolarlinien in Intervalle stetigen Phasenverlaufs, also nach der Verstetigung, als Feinphasen bezeichnet werden können. Die genannten Paare einander entsprechender Epipolarlinien können jeweils definiert werden als Abbildungen aller Punkte aus einer Ebene, die durch die Projektionszentren beider Kameraobjektive verläuft. Diese Projektionszentren können auch zur Definition der Parallaxe beim Triangulieren dienen. Sowohl die genannten Projektionszentren als auch die Epipolarlinien ergeben sich eindeutig aus einer für die verwendete Vorrichtung gewählten Geometrie.

Das Verfahren kann dadurch wesentlich vereinfacht werden, dass eine Folge mehrerer gegeneinander phasenverschobener Streifenmuster nacheinander auf das Objekt projiziert und zur Ermittlung der Phasenwerte aufgenommen wird. Vorzugsweise werden mindestens drei, besser mindestens vier gegeneinander phasenverschobene Streifenmuster zur Ermittlung eines Satzes von Phasenwerten auf das Objekt projiziert. Um einerseits eine möglichst gute Auflösung zu erlauben und andererseits das Identifizieren der einzelnen Linienpaare bzw. der Feinphasen nicht unnötig zu erschweren, kann vorgesehen sein, dass das verwendete Streifenmuster zwischen 10 und 80 Linienpaare, also Intensitätsperioden, aufweist. Es ist vorteilhaft, ein Streifenmuster zu verwenden, das senkrecht zu einer Verbindung der Projektionszentren der beiden Kameraobjektive orientierte Streifen hat. Das Identifizieren einander entsprechender Bildpunkte kann ferner dadurch vereinfacht werden, dass zusätzlich zeitlich versetzt mindestens ein weiteres Streifenmuster mit anders orientierten Streifen auf das Objekt projiziert wird, wobei Phasenwerte auch dieses weiteren Streifenmusters ausgewertet werden. Dieses weitere Streifenmuster hat dann also gegenüber den Streifen des zuerst genannten Streifenmusters oder der entsprechenden Streifenmustersequenz gedrehte Streifen. Ggf. kann auch wieder jeweils eine ganze Sequenz derart gedrehter weiterer Streifenmuster, die gegeneinander phasenverschoben sind, auf das Objekt projiziert und aufgenommen werden. Im Hinblick auf eine möglichst einfache Identifizierung einander entsprechender Bildpunkte einerseits und eine insgesamt möglichst kurze Aufnahmezeit andererseits ist es vorteilhaft, insgesamt zwischen fünf und elf Bilder mit Streifenmustern aufzunehmen.

Schließlich kann zusätzlich zu den Aufnahmen mit Streifenmustern oder besser noch gleichzeitig mit einer Streifenmusteraufnahme (durch Einbetten in das bzw. die Streifenmuster) eine Aufnahme oder mehrere Aufnahmen des Objekts mittels der beiden Kameraobjektive vorgesehen werden, bei der oder bei denen mindestens eine relativ zum zuvor, gleichzeitig oder anschließend aufgenommenen Streifenmuster definiert lokalisierte Markierungen auf das Objekt projiziert wird, wobei ein so markierter Objektpunkt trianguliert werden kann. Eine zusätzliche Aufnahme solcher lokalisierbarer Markierungen kann zu einer eindeutigen Identifikation zweier entsprechender Bildpunkte dienen, um das Verfahren zu stützen. Die Markierungen können also als separate Bilder aufgenommen oder mit den Streifenbildern vermischt und simultan aufgenommen werden.

Alternativ oder zusätzlich kann ein solches Projizieren und Triangulieren einer Markierung oder mehrerer Markierungen auch zum Kalibrieren einer für das Verfahren verwendeten Vorrichtung dienen. Ein solches Kalibrieren kann - zur Bestimmung sowohl innerer Parameter der Vorrichtung als auch der relativen Orientierung der beiden Kameraobjektive - während des Vermessens des Objekts selbst oder auch vorher anhand eines anderen Objekts (eines Prüfkörpers) erfolgen. Eine Kalibrierung kann aber - insbesondere bei Verwendung eines Prüfkörpers - auch mit einem oder mehreren Streifenbildaufnahmen und, da eine Kalibriermessung länger dauern darf, ggf. auch unter Verwendung einer Graycode-Projektion oder mit vergleichbaren Methoden erfolgen.

Die bei dem Verfahren ausgewählten und bezüglich des Phasenverlaufs ausgewerteten Epipolarlinien sollten vorzugsweise in den beiden von den zwei Kameraobjektiven erzeugten Bildern dicht liegen. Damit ist gemeint, dass schmale Umgebungsstreifen dieser Epipolarlinien die beiden Bilder abdecken sollten, um eine flächendeckende 3D-Erfassung zu ermöglichen.

In einer vorteilhaften Ausgestaltung des Verfahrens kann vorgesehen sein, dass durch eine Interpolation erfasster Phasenwerte eine bezüglich des Bildgebers und/oder der Kamerachips bzw. des Kamerachips subpixelgenaue Zuordnung von Bildpunkten zu Phasenwerten erfolgt.

Um eine Messung mit einem von Hand geführten Messkopf ohne verwacklungsbedingte Messfehler zu ermöglichen, kann vorgesehen sein, dass alle für das Erfassen einer Kontur verwendeten Streifenmuster und ggf. zusätzlich oder gleichzeitig projizierte Markierungen innerhalb eines Zeitintervalls von zwischen 100 ms und 500 ms und/oder mit einer Bildwiederholrate von zwischen 15 Hz und 60 Hz aufgenommen werden.

Ausführungsbeispiele der Erfindung werden nachfolgend anhand der Figuren 1 bis 6 erläutert. Es zeigt
- Figur 1: in Aufsicht einen Strahlengang einer nicht beanspruchten Vorrichtung,
- Figur 2: in entsprechender Darstellung einen Strahlengang zweier Kameraobjektive einer vergleichbaren Vorrichtung,
- Figur 3: in vergleichbarer Darstellung einen Strahlengang einer Vorrichtung mit Projektor,
- Figur 4: eine Seitenansicht des Strahlengangs der Vorrichtung aus Figur 3,
- Figur 5: eine mit einem geöffneten Gehäuse dargestellte Vorrichtung mit einem der Vorrichtung aus Figur 1 vergleichbaren Strahlengang,
- Figur 6: ein Ablaufdiagramm zur Darstellung eines Ausführungsbeispiels für ein erfindungsgemäßes Verfahren und
- Figur 7: eine erfindungsgemäße Vorrichtung.

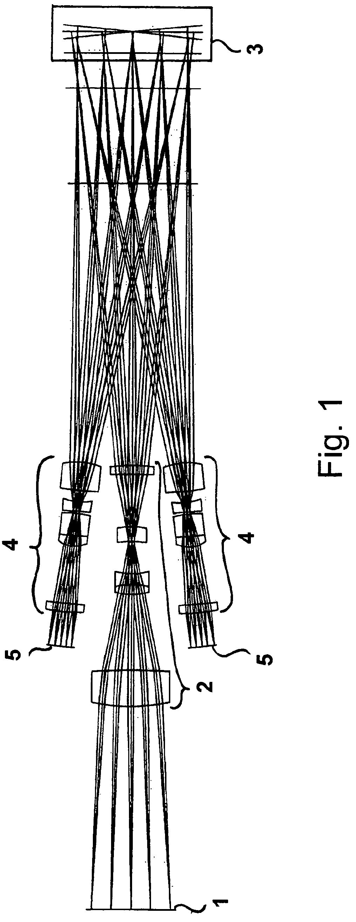

In Figur 1 zu erkennen sind optische Komponenten einer Vorrichtung zum berührungslosen Erfassen einer dreidimensionalen Kontur, insbesondere zur intraoralen oder extraoralen Erfassung von Zahnkonturen. Die abgebildete Vorrichtung umfasst einen Projektor mit einem bildgebenden Element 1 und einem Projektionsobjektiv 2 zum Abbilden eines auf dem bildgebenden Element 1 generierbaren Streifenmusters in einen Objektraum 3. Die Vorrichtung umfasst ferner zwei Kameraobjektive 4, die zu einer Kameraanordnung gehören, mit der der Objektraum 3 aus zwei um einen Winkel von etwa 12° gegeneinander gekippten Richtungen beobachtet werden kann. Der Projektor und die Kameraanordnung, die hier für jedes der Kameraobjektive 4 jeweils einen als monochromen CCD-Chip ausgeführten Kamerachip 5 aufweist, sind dabei in einem gemeinsamen Messkopf untergebracht, der als Handgerät verwendbar ist.

Der Projektor ist bei der abgebildeten Vorrichtung so angeordnet, dass er eine optische Achse hat, die mit einer winkelhalbierenden zwischen zwei durch die Kameraobjektive 4 definierten optischen Achsen in Deckung liegt. Sowohl die Kameraobjektive 4 als auch das Projektionsobjektiv 2 haben eine Objektschnittweite von etwa 10 cm. Der Objektraum 3, in den scharf projiziert werden kann und der von einem Tiefenschärfenbereich der Kameraanordnung umfasst ist, hat laterale Dimensionen von etwa 25 mm x 15 mm und eine Tiefe in Richtung der optischen Achse des Projektors von etwa 13 mm.

Das bildgebende Element 1, bei dem es sich hier um einen LCoS-Chip handelt, hat laterale Abmessungen von etwa 6 mm x 4 mm bis zu 16 mm x 12 mm. Das bildgebende Element 1 dient hier zum reflexiven Intensitätsmodulieren von Licht, das von einer in der Figur 1 selbst nicht abgebildeten Lichtquelle ausgeht. Alternativ könnte auch ein üblicher LCD-Chip vorgesehen sein, der Licht einer Lichtquelle transmissiv moduliert.

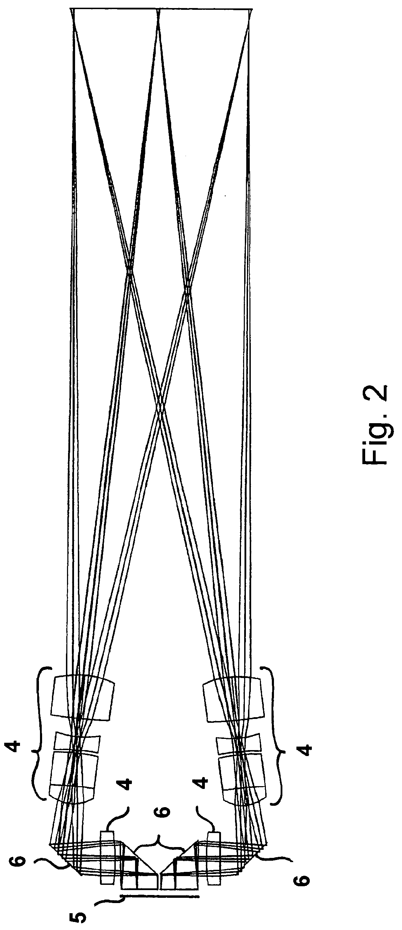

In Figur 2 ist eine andere nicht beanspruchte Vorrichtung dargestellt, wobei hier nur die Kameraanordnung der entsprechenden Vorrichtung abgebildet ist. Wiederkehrende Merkmale sind hier, wie auch in den folgenden Figuren, wieder mit den selben Bezugszeichen versehen. Abweichend von vor der zuvor beschriebenen Vorrichtung weist diese Kameraanordnung nur einen einzigen Kamerachip 5 auf, bei dem es sich wieder um einen monochromen CCD-Chip handelt, wobei die Strahlengänge beider Kameraobjektive 4 bildseitig durch jeweils zwei Umlenkspiegel 6 so gefaltet sind, dass jedes der Kameraobjektive 4 ein Bild auf jeweils einer Hälfte des Kamerachips 5 erzeugt. Es kann vorgesehen sein, dass der Strahlengang des Projektors bei dem in Figur 2 dargestellten Ausführungsbeispiel um einen Winkel von etwa 5° aus einer durch die optischen Achsen der Kameraobjektive 4 definierten Ebene herausgekippt ist. Abgesehen davon ist auch hier eine möglichst symmetrische Anordnung des Projektionsstrahlengangs vorgesehen.

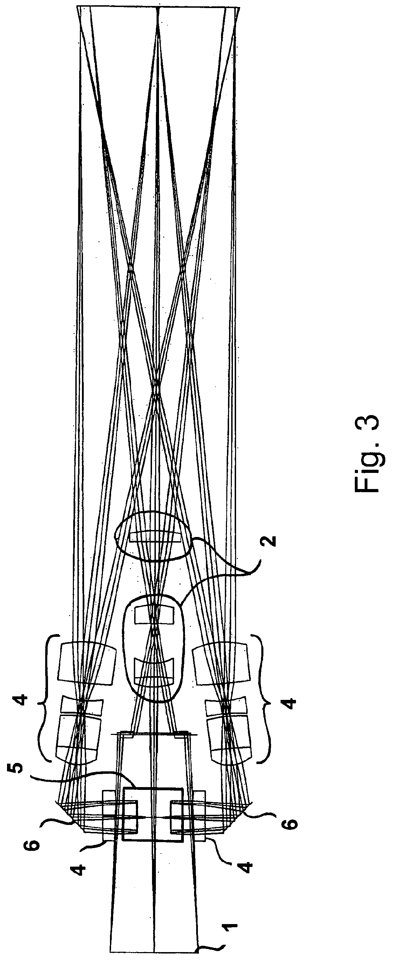

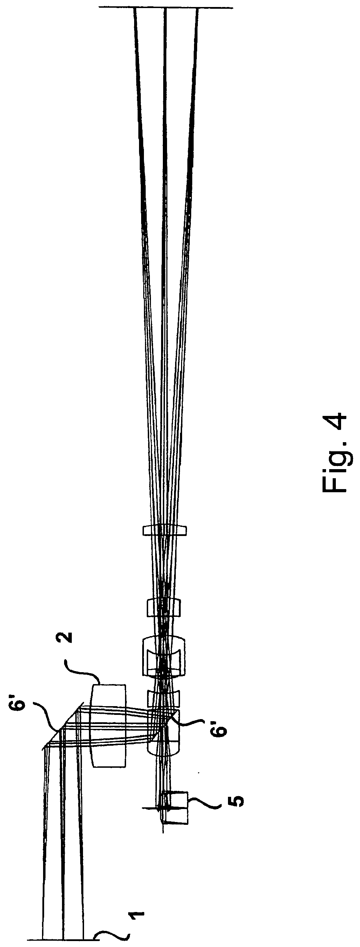

Eine andere Vorrichtung ist schließlich in den Figuren 3 und 4 dargestellt. Auch hier weist die Kameraanordnung für beide Strahlengänge nur einen einzigen Kamerachip 5 auf, dessen zwei Hälften durch jeweils eines der Kameraobjektive 4 belichtet werden können. Der Kamerachip 5 ist hier parallel zu einer durch die optischen Achsen der Kameraobjektive 4 definierten Ebene angeordnet. Wie in Figur 4 zu erkennen ist, weist auch der Projektor bei diesem Ausführungsbeispiel einen durch zwei Umlenkspiegel 6' gefalteten Strahlengang auf.

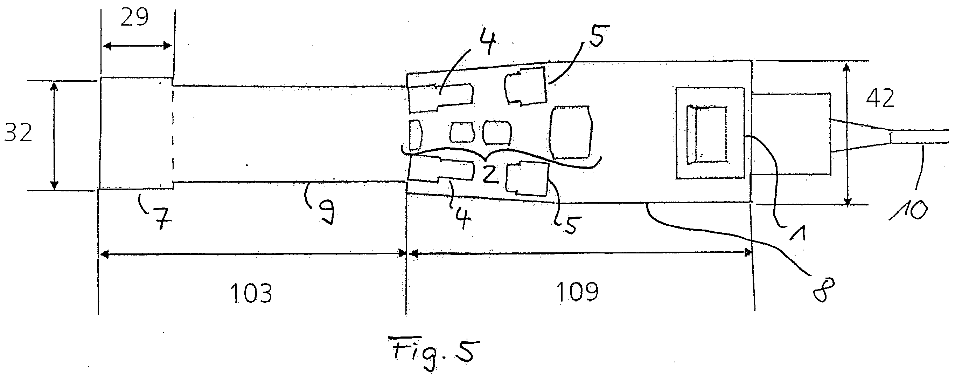

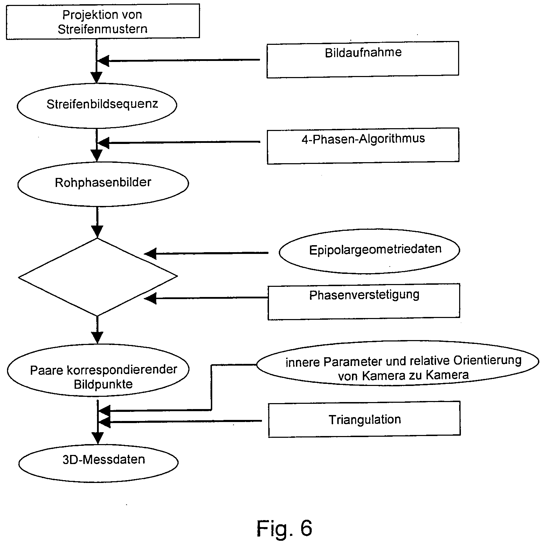

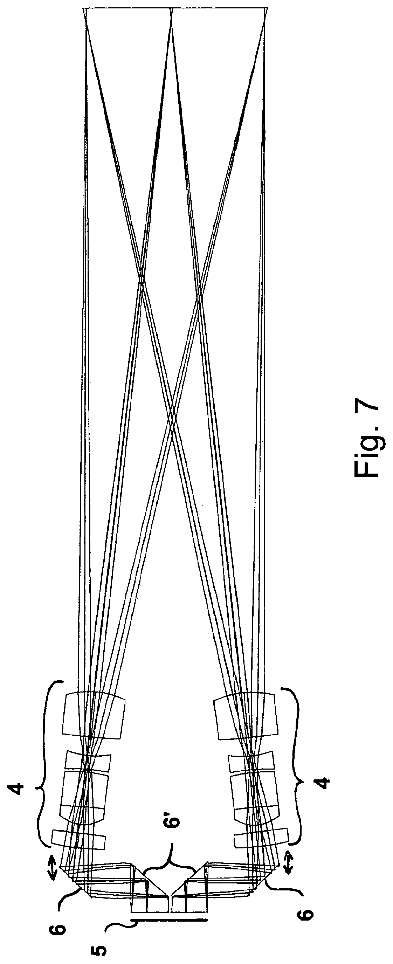

In Figur 5 ist eine weitere nicht beanspruchte Vorrichtung abgebildet, die sich von der in Figur 1 dargestellten Ausführung lediglich dadurch unterscheidet, dass objektseitig ein Umlenkspiegel vorgesehen ist, um insbesondere intraorale Messungen zu erleichtern. Dargestellt ist in Figur 5 auch ein Gehäuse des Messkopfs der Vorrichtung mit einen verhältnismäßig schmalen Gehäuseende 9, das den Umlenkspiegel 7 trägt. In der Figur 5 eingefügte Zahlenangaben bezeichnen Abmessungen des Gehäuses 8 in mm. Die abgebildete Vorrichtung weist eine außerhalb des Gehäuses 8 angeordnete und in der Figur 5 nicht abgebildete Lichtquelle auf, die über einen Lichtleiter 10 eines Durchmessers von etwa 5 mm mit dem Messkopf verbunden ist. Bei einer Abwandlung kann vorgesehen sein, dass statt dessen eine Lichtquelle in den Messkopf selbst untergebracht ist. Nachfolgend wird anhand der Figur 6 ein Verfahren beschrieben. Die erfindungsgemäße Vorrichtung, die anhand Figur 7 beschrieben wird, weist eine nicht dargestellte Steuer- und Auswerteeinheit, die programmtechnisch so ausgerichtet ist, dass die Vorrichtung zur Durchführung des nachfolgend beschriebenen Verfahrens geeignet ist

Dieses Verfahren dient zum berührungslosen Erfassen einer dreidimensionalen Kontur, insbesondere einer intraoral oder extraoral abgetasteten Oberflächen von Zähnen, Zahnmodellen oder Zahnersatz. Bei dem Verfahren wird zunächst mit dem Projektor eine Sequenz von Streifenmustern auf das Objekt projiziert, dessen dreidimensionale Kontur erfasst werden soll, wobei mit den Kameraobjektiven 4 zwei Bilder dieses Objekts mit dem jeweils aufprojizierten Streifenmuster aufgenommen werden. Dabei werden zunächst zum Beispiel vier Streifenmuster, die sich lediglich durch eine verschobene Phase im Ortsraum voneinander unterscheiden, projiziert und aufgenommen, so dass mit einem sog. 4-Phasen-Algorithmus (selbstverständlich kann bei anderen Ausgestaltungen des Verfahrens auch ein anderer geeigneter Phasen-Algorithmus verwendet werden) für jedes der zwei Bilder Phasenwerte des Streifenmusters bzw. der Streifenmustersequenz ermittelt werden, wodurch also Rohphasenbilden erzeugt werden. Das ist problemlos möglich, indem für die Aufnahme jedes der Streifenmuster aus der Sequenz Intensitäten auf jedem Pixel des jeweiligen Kamerachips 5 gemessen werden. Als Rohphasen seien dabei Intensitätsphasen bezeichnet, die - bei einer Parametrisierung einer Intensitätsperiode von 0 bis 2n - nur modulo 2n verwertbar sind.

In einem weiteren Schritt, der in Figur 6 als Raute dargestellt ist, werden nun einander entsprechende Bildpunkte in den beiden durch die Kameraobjektive 4 aufgenommenen Bildern ermittelt, indem einander jeweils entsprechende Epipolarlinien in den beiden Bildern ausgewählt werden, die ermittelten Phasenwerte längs der Epipolarlinien auf Stetigkeit hin geprüft werden und die Epipolarlinien damit in Intervalle stetigen Phasenverlaufs eingeteilt werden, wonach einander entsprechende Intervalle in den einander entsprechenden Epipolarlinien identifiziert und innerhalb der einander entsprechenden Intervalle Punkte gleicher Phasenwerte einander zugeordnet werden. Dabei können die Phasenwerte innerhalb der genannten Intervalle als Feinphasen bezeichnet werden, denen durch eine vorgenommene Phasenverstetigung ein Informationsgehalt zukommt, der zur eindeutigen Identifikation jedes Punktes in diesem Intervall genügt. Die Phasenverstetigung, d.h. das Bewerten der Phasenwerte längs der Epipolarlinien auf Stetigkeit hin und das Einteilen der Epipolarlinien in Intervalle stetigen Phasenverlaufs, kann dabei mittels an sich bekannter Verstetigungsalgorithmen geschehen. Vorzugsweise werden die Paare von Epipolarlinien so ausgewählt, dass sie beide Bilder möglichst dicht abdecken. Die Ermittlung einander korrespondierender Epipolarlinien ist dabei problemlos möglich, weil sich die Epipolarlinien für jeden Bildpunkt in jedem der Bilder eindeutig ergeben.

Schließlich wird auf Basis jeweils einander entsprechender Bildpunkte in den beiden Bildern, die durch die beiden Kameraobjektive 4 erzeugt werden, durch Triangulieren eine Tiefeninformation für einen diesen Bildpunkten entsprechenden Objektpunkt ermittelt. In der Figur 6 sind technische oder rechnerische Vorgänge durch entsprechend beschriftete rechteckige Felder, eingegebene oder ausgegebene Daten durch entsprechend beschriftete ovale Felder veranschaulicht.

Die verwendeten Streifenmuster sind so dimensioniert, dass etwa 50 äquidistante Perioden den in Figur 1 eingezeichneten Objektraum 3 überdecken. Es ist vorgesehen, dass eine Sequenz von Streifenmustern mit Streifen erzeugt wird, die senkrecht zur Zeichenebene in den Figuren 1 bis 3 orientiert sind. Zusätzlich sollen zwischen einem und sieben weiteren Streifenmustern mit anderen Orientierungen auf das Objekt projiziert und entsprechend ausgewertet werden, um das Verfahren zu stützen. Es kann vorgesehen sein, dass zusätzlich oder gleichzeitig mindestens eine Aufnahme gemacht wird, bei der eindeutig lokalisierte Markierungen auf das Objekt projiziert sind, was bei dem Verfahren ebenfalls in stützender Weise beim Identifizieren einander entsprechender Bildpunkte helfen kann.

In beschriebener Weise sollten so viele Epipolarlinien untersucht werden, dass Umgebungsstreifen dieser Epipolarlinien, die eine Breite von bis zu einem vierfachen Pixelabstand haben, die Bilder vollständig abdecken. Durch Interpolation gemessener Intensitäten kann dabei sogar eine mehr als pixelgenaue Zuordnung von Bildpunkten zu Phasenwerten und dementsprechend eine sehr genaue Triangulierung der Kontur erfolgen. Durch Verwendung eines schnell arbeitenden VierPhasen-Algorithmus zur Phasenberechnung wird die Aufnahmezeit der Bildsequenz mit den Streifenmustern gering gehalten. Für die Aufnahme von Sequenzen von beispielsweise 8 bis 10 Bildern bei einer Dauer von 20 ms bis 40 ms pro Bild können sich z.B. Aufnahmezeiten von zwischen 160 ms und 400 ms pro Messposition ergeben. Mit Blick auf eine intraorale Anwendung kann es schließlich vorteilhaft sein, wenn die verwendete Vorrichtung einen modularen Messkopf oder Sensorkopf mit einem abnehmbaren Mundstück hat.

Wesentliche Merkmale der hier vorgeschlagenen Erfindung sind nach alledem insbesondere eine Rohphasenbestimmung aus Intensitätsbildern, die mit zwei Kameras aus zwei verschiedenen Richtungen aufgenommen werden, sowie eine Berechnung dreidimensionaler Daten unter Rückgriff auf Epipolargeometrie, Verstetigung von Rohphasen, Bestimmung korrespondierender Pixel über Phasenkorrelation und Berechnung von Tiefenwerten durch Triangulation auf Basis korrespondierender Pixel.

Eine bevorzugte Ausführung der vorgeschlagenen Erfindung wird nachfolgend noch einmal zusammenfassend beschrieben.

Die als Handscanner zu bezeichnende Vorrichtung ist ein Gerät zum Scannen von Zähnen im Mundinnenraum. Er besteht aus einem Teil, der in den Mund eingeführt wird und einem Handteil mit den optischen, elektronischen und mechanischen Komponenten, die die Übertragung der Beleuchtungsstrahlen von der Beleuchtungsquelle über die Beleuchtungsoptik auf den Zahn und die Übertragung der Belobachtungsstrahlen vom Zahn zur Beobachtungsoptik bis zum Sensor (CCD) realisieren.

Das Gerät enthält als bildgebendes Element 1 einen Projektionschip, der eine Sequenz von Streifenmustern auf das Messobjekt (Zahn) projiziert. Diese Streifenmustersequenz wird aus zwei Beobachtungsrichtungen beobachtet und aufgenommen. Aus den aufgenommenen Intensitätsbildern werden Phasenwerte berechnet. Die 3D-Messdaten werden mit phasogrammetrischen Methoden über eine Phasenkorrelation mittels Triangulation zwischen den beiden Kanälen der Beobachtung gewonnen, s. z.B. Figur 1.

Das Prinzip, das simultan zwei Beobachtungsrichtungen und eine Beleuchtungsrichtung realisiert, beinhaltet zwei separate optische Kanäle zur Beobachtung, deren Achsen links und rechts typischerweise annähernd symmetrisch zur Beleuchtungsrichtung angeordnet werden. Ein eventuell vorhandener Off-Plan-Winkel zwischen der optischen Achse der Projektion und der Ebene, die durch die beiden optischen Achsen der Kameras definiert wird, ist vorzugsweise kleiner 5°.

Durch Beleuchtung und Beobachtung wird ein Messfeld von lateral ca. 25 mm x 15 mm realisiert. Die Ausdehnung des Objektraums 3 oder des Messvolumens in Richtung der optischen Achse (Schärfentiefebereich) beträgt ca. ± 6,5 mm = 13 mm.

Als Beleuchtungsquelle dient eine abgesetzte Kaltlichtquelle. Das Licht der (abgesetzten) Quelle wird über einen Flüssiglichtleiter eines Durchmessers von etwa 5 mm in den intraoral arbeitenden Sensorkopf oder Messkopf eingekoppelt.

Die Beleuchtungsoptik ist so entworfen, dass sie verzeichnungsarm arbeitet. Für die Beobachtung werden CCD-Kameratechnik und fast verzeichnungsfreie Objektive verwendet. Erfindungsgemäß sind die zwei Beobachtungsrichtungen derart vereint, dass nur ein Kamerachip 5 zur Beobachtung verwendet wird (Siehe Figur 7).

Zur Gewinnung der Messwerte kommt als Verfahren die Phasogrammetrie als grundlegendes Messprinzip zur Anwendung. Die Methode der Phasogrammetrie stellt die mathematisch geschlossene Verschmelzung der Methodik der Photogrammetrie mit der aktiven Musterprojektion dar.

Es werden Mustersequenzen verschiedener Orientierung auf das zu vermessende Objekt projiziert und durch die beobachtenden Kameras aufgenommen, wobei durch entsprechende Algorithmen Feinphasenwerte bestimmt werden. Aus korrelierenden Feinphasenwerten zweier Beobachtungsrichtungen, den Parametern der inneren Orientierung der Vorrichtung und der relativen Orientierung zwischen den Beobachtungsrichtungen werden die 3D-Messwerte generiert.

Die Parameter der inneren Orientierung und die relative Orientierung zwischen den Beobachtungsrichtungen werden im Rahmen einer Kalibriermessung bestimmt. Dies kann entweder aus den Daten der Messung selbst oder aber a priori durch eine separate Kalibriermessung mit höherer Genauigkeit bestimmt werden. Dazu werden eine oder mehrere extraorale Messungen eines Kalibrierkörpers mit höchster Genauigkeit durchgeführt. Zur Erzeugung der Rohphasenbilder (= Phase modulo 2n) bei der Kalibrierung wird z.B. ein 4- oder 16-Phasen-Algorithmus verwendet. Die Bestimmung der inneren Orientierung der Kameras und ggf. des Projektors erfolgt mit photogrammetrischen Methoden. Weiterhin kann die relative Orientierung zwischen den beiden Beobachtungsrichtungen aus der Kalibriermessung bestimmt werden.

Zur Berechnung der 3D-Messdaten werden die durch die Beobachtungsrichtungen definierten Strahlenbündel verwendet und eine Phasenkorrelation im Kamerabild durchgeführt. Im ersten Schritt erfolgt die Aufnahme der Bildsequenz.

Durch die Projektionseinheit werden zwei gekreuzte Sequenzen von insgesamt fünf bis elf Bildern von Streifenmustern projiziert und aus beiden Beobachtungsrichtungen aufgenommen Die Bildaufnahme benötigt bei einer Bildwiederholrate von 30 Hz zwischen 160 und 370 ms.

Mittels eines Phasen-Algorithmus werden für jede Beobachtungsrichtung Rohphasenbilder berechnet. In einem oder mehreren der Bilder können ein oder mehrere Bildpunkte als Markierungen oder Marker verwendet werden. Marker sind eindeutig identifizierbare Punkte im Bild, deren Ursprung auf dem Projektionschip bekannt ist. Sie dienen der Realisierung der absoluten Phasenbestimmung.

Im zweiten Schritt erfolgt die Zuordnung der Punkte zwischen den Kamerabildern.

Für die 3D-Punktberechnung müssen die Rohphasenbilder in Feinphasenbilder umgewandelt werden, um eine eindeutige Punktzuordnung zwischen den Bildern der beiden Kameras zu erzielen. Die Zuordnung der Bildpunkte beider Beobachtungsrichtungen erfolgt mit Hilfe der Rohphaseninformation und der Epipolargeometrie.

Hierzu werden nur Bildpunkte betrachtet, die auf korrespondierenden Epipolarlinien in den Bildern der beiden Beobachtungsrichtungen liegen. Diese Linien sind durch die Auswahl bestimmter Punkte in einem Bild und den Daten der inneren und der relativen Orientierung eindeutig bestimmt.

Zur Realisierung einer ausreichenden Auswahl von Messpunkten werden die Bilder entsprechend dicht mit korrespondierenden Epipolarlinienscharen abgedeckt. Epipolarlinien sind Bilder von Ebenen im Raum, die durch die Projektionszentren der beiden Beobachtungsrichtungen und einen diese Raumebene charakterisierenden Punkt im Objektraum verlaufen. Damit werden sie in den Bildern als korrespondierende Geraden abgebildet.

Alle Punkte auf der Epipolarlinie eines Bildes haben ihre korrespondierenden Punkte auf der entsprechenden Epipolarlinie im zweiten Bild. Die Aufgabe des Findens von Punktkorrespondenzen reduziert sich hiermit auf den eindimensionalen Fall.

Das Finden der Korrespondenzen erfolgt über die Korrelation der Phasenwerte auf den Epipolarlinien. Dazu ist noch eine Verstetigung der Rohphasenwerte auf den Epipolarlinien erforderlich. Dies wird durch eine Analyse der Periodenübergänge, die Detektion von Unstetigkeitsstellen, die Betrachtung benachbarter Bildpunkte und die Verfolgung von Periodenübergängen im Bild realisiert. Die detektierten Marker dienen hierbei als Ausgangspunkte für eine Verfolgung im Bild und als Kontrollpunkte.

Im dritten Schritt erfolgt die Berechnung der 3D-Messdaten.

Dazu werden die subpixelgenau bestimmten Koordinaten korrespondierender Bildpunkte zusammen mit der relativen Orientierung und den Parametern der inneren Orientierung mittels Triangulation zu einer 3D-Punktewolke verrechnet, die das Endergebnis des Scannprozesses darstellt.

Für das skizzierte Verfahren ist also eine Verstetigung der Rohphase erforderlich. Diese Rohphasenverstetigung muss bei Verwendung der Epipolargeometrie nicht mehr in einer zweidimensionalen Fläche erfolgen, sondern reduziert sich auf ein eindimensionales Problem, indem korrespondierende Geraden in beiden Bildern betrachtet werden.

Eine eindeutige Rohphasenzuordnung kann jedenfalls dann erreicht werden, wenn korrespondierende Startpunkte auf zwei Abschnitten der Geraden in beiden Bildern gefunden werden und solange die Funktion der Phasenwerte auf den Geradenabschnitten stetig bleibt. Unstetigkeitsstellen definieren neue Geradenabschnitte. Für jedes Paar korrespondierender Geradenabschnitte auf korrespondierenden Epipolarlinien muss also ein korrespondierender Punkt gefunden werden. (Dabei kann auch wieder auf Stetigkeitsanalysen von Phasenwerten zwischen benachbarten Epipolarlinien zurückgegriffen werden.) Der Algorithmus zur Punktzuordnung (Verstetigung der Rohphase) zerlegt korrespondierende Epipolarlinien in stetige Abschnitte und findet in jeweils korrespondierenden Abschnitten korrespondierende Startpunkte.

Bei Verwendung einer 1-Chip-Lösung für die Kameraanordnung (siehe Figuren 2-4)) wird die Epipolargeometrie entsprechend zwischen den beiden Teilkanälen der Kamera berechnet werden. So kann nicht nur ein kompakter Aufbau realisiert werden, sondern auch eine einfachere Auswerteelektronik verwendet werden. In Figur 7 sind schließlich Teile einer Vorrichtung zum berührungslosen Erfassen einer dreidimensionalen Kontur nach der Erfindung gezeigt. Die Darstellung entspricht dabei weitgehend der Figur 2. Entsprechende Merkmale, für die das bereits oben Gesagte gilt, sind wieder mit den gleichen Bezugszeichen versehen. Hier soll nur auf die Abweichungen gegenüber der Vorrichtung aus Figur 2 eingegangen werden.

Im Strahlengang beider Kameraobjektive 4 sind wieder als Umlenkelemente jeweils ein erster Umlenkspiegel 6 und ein vom Objektraum aus gesehen zweiter Umlenkspiegel 6' angeordnet, die den insgesamt vier Umlenkspiegeln 6 aus Figur 2 entsprechen. Anders als bei der Vorrichtung aus Figur 2 sind hier sämtliche Linsen der Kameraobjektive 4 objektseitig beider im jeweiligen Strahlengang angeordneter Umlenkspiegel 6 und 6' und damit objektseitig aller Umlenkelemente aus den Strahlengängen der Kameraobjektive 4 platziert, während zwischen dem vom Objektraum aus gesehenen ersten Umlenkspiegel 6 und dem zweiten Umlenkspiegel 6' hier kein beugendes Element mehr angeordnet ist. Das erleichtert eine Justage der Kameraoptiken durch ein Verschieben und/oder Verdrehen der ersten Umlenkspiegel 6, die dazu jeweils auf einem Schlitten befestigt sind, der in Richtung eines in Figur 2 eingezeichneten Doppelpfeils verschiebbar und in einer gewünschten Position durch Festschrauben fixierbar ist. Auf diesen Schlitten ist jeweils einer der beiden ersten Umlenkspiegel 6 um eine zur Zeichenebene der Figur 2 senkrechte Achse drehbar und in einer gewünschten Position fixierbar angeordnet.

Diese Auslegung bringt den entscheidenden Vorteil mit sich, dass ein Justieren der Kameraobjektive 4 durch ein Verstellen der ersten Umlenkspiegel 6 ohne Änderung einer inneren Geometrie der abbildenden Elemente der Kameraobjektive 4, also hier der jeweils fünf erkennbaren Linsen, möglich ist. Die Justage ändert also in vorteilhafter Weise nicht die Abbildungsqualität der Kameraobjektive 4. Eventuell kann zusätzlich ein aus den beiden zweiten Umlenkspiegeln 6' gebildeter Prismenblock auf einem Linearschlitten angeordnet und zu Justagezwecken in Richtung der Symmetrieachse bzw. optischen Achse des Kamerachips 5 verschiebbar ausgeführt sein. Selbstverständlich kann auch die Vorrichtung aus den Figuren 3 und 4 in entsprechender Weise abgewandelt werden, so dass alle Linsen der Kameraobjektive 4 objektseitig der Umlenkspiegel 6 angeordnet und die Umlenkspiegel 6 in der hier beschriebenen Weise justierbar sind.

Eine in den Figuren nicht dargestellte Beleuchtungsoptik des Projektors, mit der Licht auf das z.B. als LCoS-Chip ausgeführte bildgebende Element 1 gelenkt wird, ist vorzugsweise telezentrisch ausgeführt, um eine möglichst hohe Strahlungsleistung zu realisieren.

Mit Vorrichtungen der vorstehend beschriebenen Art können dreidimensionale Konturen auch mit alternativen Verfahren berührungslos erfasst werden, insbesondere durch ein Projizieren von Streifenmustern mit Gray-Codes. Dazu kann die Steuer- und Auswerteeinheit zum Ansteuern des bildgebenden Elements 1 und zum Auswerten von der Kameraanordnung erzeugter Bilddaten der jeweiligen Vorrichtung programmtechnisch eingerichtet sein
- zum Generieren von Gray-Codes enthaltenden Streifenmustern auf dem bildgebenden Element 1,
- zum Identifizieren von einander entsprechenden Bildpunkten in durch die beiden Kameraobjektive erzeugten Bildern durch ein Auswerten der Gray-Codes und
- zum Triangulieren eines Objektpunkts auf Basis der diesem Objektpunkt entsprechenden, als miteinander korrelierend identifizierten Bildpunkte.

Bei einem entsprechenden Verfahren zum berührungslosen Erfassen einer dreidimensionalen Kontur werden also Gray-Codes enthaltende Streifenmuster auf ein Objekt projiziert und mittels zweier in einem definierten Abstand zueinander angeordneter Kameraobjektive aus zwei verschiedenen Richtungen zwei Bilder des Objekts mit dem aufprojizierten Streifenmuster aufgenommen und für Bildpunkte in beiden Bildern Phasenwerte des Streifenmusters ermittelt, wonach durch Triangulieren auf Basis jeweils einander entsprechender Bildpunkte in den beiden Bildern eine Tiefeninformation für einen diesen Bildpunkten entsprechenden Objektpunkt ermittelt wird, wobei die einander entsprechenden Bildpunkte in den beiden Bildern durch Auswerten der Gray-Codes ermittelt werden.

Dabei ist vorgesehen, dass - z.B. durch eine entsprechende Programmierung der Steuer- und Auswerteeinheit mindestens - für eine Messung zumindest ein erster Satz und ein zweiter Satz von Streifenmustern mit jeweils parallelen Streifen projiziert werden, wobei die Streifen des ersten Satzes mit den Streifen des zweiten Satzes einen nichtverschwindenden Winkel, vorzugsweise einen Winkel von zumindest etwa 90°, einschließen und jeder Satz eine Menge von mindestens drei, vorzugsweise genau vier, zueinander phasenverschobenen Streifenmustern mit sinusförmigem Intensitätsverlauf umfasst, die allein bereits eine Ermittlung einer Phase mod 2π erlauben, wobei ferner jeder Satz weitere Streifenmuster umfasst, die zur Ermittlung einer absoluten Phase Gray-codiert sind.

Damit wird insgesamt eine verhältnismäßig große Zahl von Streifenmustern projiziert und aufgenommen. Um Verwacklungen aufgrund einer damit verbundenen relativ langen Messzeit, insbesondere bei Verwendung eines Handgeräts zum Projizieren und Aufnehmen der Streifenmuster, zu vermeiden, sieht nun eine besonders bevorzugte Ausführung der Erfindung vor, dass die Menge der Streifenmuster mit sinusförmigem Intensitätsverlauf aus dem ersten Satz von Streifenmustern und die Menge der Streifenmuster mit sinusförmigem Intensitätsverlauf aus dem zweiten Satz von Streifenmustern, unmittelbar hintereinander projiziert werden, während die Gray-codierten Streifenmuster vor und/oder nach den beiden genannten Mengen von Streifenmustern mit sinusförmigem Intensitätsverlauf projiziert werden, nicht aber zwischen einzelnen der Streifenmuster mit sinusförmigem Intensitätsverlauf. Die Streifenmuster mit sinusförmigem Intensitätsverlauf aus dem ersten Satz von Streifenmustern und die Streifenmuster mit sinusförmigem Intensitätsverlauf aus dem zweiten Satz von Streifenmustern können dabei unter Umständen in beliebiger Reihenfolge projiziert werden, möglich ist z.B. eine Projektion zunächst aller dieser Streifenmuster aus dem ersten und dann der sinusförmig verlaufenden Streifenmuster aus dem zweiten Satz. Durch diese Maßnahme wird erreicht, dass die Streifenmuster mit sinusförmigem Intensitätsverlauf - typischerweise sind das bei zwei Streifenrichtungen insgesamt acht Streifenmuster, wobei evtl. auch sechs dieser Streifenmuster genügen können - innerhalb einer sehr kurzen und daher verwacklungssicheren Zeitspanne projiziert und aufgenommen werden können. Die Gray-codierten Streifenmuster fallen dann zwar aus dieser sehr kurzen Zeitspanne heraus, was aber unschädlich ist, weil sie nur noch zur Ermittlung der absoluten Phase einer bereits mod 2π bekannten Phase dienen und ihre Aufnahme damit längst nicht so verwacklungsempfindlich ist. So kann in vorteilhafter Weise die eindeutige Zuordnung von Bildpunkten in den Bildebenen der beiden Kameraobjektive durch Projektion von Gray-Codes mit einem verwacklungssicheren Betrieb der entsprechenden Vorrichtung auch als Handgerät verbunden werden.

## Patentansprüche

1. Vorrichtung zum berührungslosen Erfassen einer dreidimensionalen Kontur, umfassend einen Projektor mit einem bildgebenden Element (1) und einem Projektionsobjektiv (2) zum Abbilden eines auf dem bildgebenden Element (1) generierbaren Streifenmusters in einen Objektraum (3) sowie eine zwei Kameraobjektive (4) umfassende Kameraanordnung zur Beobachtung des Objektraums (3) aus zwei unterschiedlichen Richtungen, wobei der Projektor und die Kameraanordnung gemeinsam in einem als Handgerät verwendbaren Messkopf untergebracht sind, **dadurch gekennzeichnet, dass** die Kameraanordnung einen gemeinsamen Kamerachip (5) für beide Kameraobjektive (4) aufweist, wobei jedes der Kameraobjektive (4) ein Bild auf jeweils einer Hälfte des Kamerachips (5) erzeugt, wobei in einem Strahlengang jedes der beiden Kameraobjektive (4) jeweils mindestens zwei Umlenkelemente (6, 6') angeordnet sind, wobei sämtliche Linsen der Kameraobjektive (4) objektseitig dieser Umlenkelemente (6, 6') angeordnet sind und wobei zumindest ein erstes Umlenkelement (6) der Umlenkelemente (6, 6') aus dem Strahlengang jedes der beiden Kameraobjektive (4) zum Justieren auf einem verschiebbaren Schlitten angeordnet ist.

2. Vorrichtung nach Anspruch 1, **dadurch gekennzeichnet, dass** die zwei Kameraobjektive (4) einen Winkel von zwischen 5° und 20° einschließende optische Achsen haben.

3. Vorrichtung nach einem der Ansprüche 1 oder 2, **dadurch gekennzeichnet, dass** die Kameraobjektive (4) und/oder das Projektionsobjektiv (2) für eine objektseitige Schnittweite von zwischen 7 cm und 13 cm ausgelegt ist.

4. Vorrichtung nach einem der Ansprüche 1 bis 3, **dadurch gekennzeichnet, dass** eine Lichtquelle für den Projektor vorgesehen ist, wobei von dieser Lichtquelle ausgehendes Licht durch das transmissiv oder reflektierend ausgeführte bildgebende Element (1) intensitätsmodulierbar ist.

5. Vorrichtung nach Anspruch 4, **dadurch gekennzeichnet, dass** die Lichtquelle in dem Messkopf untergebracht oder über einen Lichtleiter (10) mit dem Messkopf verbunden ist.

6. Vorrichtung nach einem der Ansprüche 1 bis 5, **dadurch gekennzeichnet, dass** die Vorrichtung ferner eine Steuer- und Auswerteeinheit zum Ansteuern des bildgebenden Elements (1) und zum Auswerten von der Kameraanordnung erzeugter Bilddaten umfasst,
wobei die Steuer- und Auswerteeinheit programmtechnisch eingerichtet ist
- zum Generieren mindestens eines Streifenmusters auf dem bildgebenden Element (1) sowie
- zum Bewerten eines Verlaufs von mit der Kameraanordnung ermittelten Phasenwerten längs von einander entsprechenden Epipolarlinien in Bildebenen beider Kameraobjektive (4) auf Stetigkeit,
- zum Einteilen der Epipolarlinien in Intervalle stetigen Phasenverlaufs,
- zum Identifizieren einander entsprechender Intervalle in den einander entsprechenden Epipolarlinien,
- zum Identifizieren von einander entsprechenden Bildpunkten gleicher Phasenwerte innerhalb der als miteinander korrelierend identifizierten Intervalle und
- zum Triangulieren eines Objektpunkts auf Basis der diesem Objektpunkt entsprechenden, als miteinander korrelierend identifizierten Bildpunkte.

7. Verfahren zum berührungslosen Erfassen einer dreidimensionalen Kontur, bei dem mindestens ein Streifenmuster auf ein Objekt projiziert wird und mittels zweier in einem definierten Abstand zueinander angeordneter Kameraobjektive (4) einer Kameraanordnung aus zwei verschiedenen Richtungen zwei Bilder des Objekts mit dem aufprojizierten Streifenmuster aufgenommen werden, wobei die Kameraanordnung einen gemeinsamen Kamerachip (5) für beide Kameraobjektive (4) aufweist, wobei jedes der Kameraobjektive (4) ein Bild auf jeweils einer Hälfte des Kamerachips (5) erzeugt, wobei in einem Strahlengang jedes der beiden Kameraobjektive (4) jeweils mindestens zwei Umlenkelemente (6, 6') angeordnet sind, wobei sämtliche Linsen der Kameraobjektive (4) objektseitig dieser Umlenkelemente (6, 6') angeordnet sind und wobei zumindest ein erstes Umlenkelement (6) der Umlenkelemente (6, 6') aus dem Strahlengang jedes der beiden Kameraobjektive (4) zum Justieren auf einem verschiebbaren Schlitten angeordnet ist und mittels dieses Schlittens zum Justieren verschoben wird, wobei für Bildpunkte in beiden Bildern Phasenwerte des Streifenmusters ermittelt werden, wonach durch Triangulieren auf Basis jeweils einander entsprechender Bildpunkte in den beiden Bildern eine Tiefeninformation für einen diesen Bildpunkten entsprechenden Objektpunkt ermittelt wird,
wobei zur Ermittlung der einander entsprechenden Bildpunkte in den beiden Bildern
- Paare einander jeweils entsprechender Epipolarlinien in den beiden Bildern ausgewählt werden,
- die ermittelten Phasenwerte längs der Epipolarlinien auf Stetigkeit bewertet werden
und
- die Epipolarlinien damit in Intervalle stetigen Phasenverlaufs eingeteilt werden,
- wonach einander entsprechende Intervalle in den einander entsprechenden Epipolarlinien identifiziert und innerhalb der einander entsprechenden Intervalle Punkte gleicher Phasenwerte einander zugeordnet werden.

8. Verfahren nach Anspruch 7, **dadurch gekennzeichnet, dass** eine Folge mehrerer gegeneinander phasenverschobener Streifenmuster nacheinander auf das Objekt projiziert und zur Ermittlung der Phasenwerte aufgenommen wird.

9. Verfahren nach einem der Ansprüche 7 oder 8, **dadurch gekennzeichnet, dass** zeitlich versetzt mindestens ein weiteres Streifenmuster mit anders orientierten Streifen auf das Objekt projiziert wird, wobei Phasenwerte auch dieses weiteren Streifenmusters zum Identifizieren einander entsprechender Bildpunkte in den beiden Bildern ausgewertet werden.

10. Verfahren nach einem der Ansprüche 7 bis 9, **dadurch gekennzeichnet, dass** mindestens eine Aufnahme des Objekts mittels der beiden Kameraobjektive gemacht wird, bei der mindestens eine relativ zum gleichzeitig, zuvor oder anschließend aufgenommenen Streifenmuster definiert lokalisierte Markierung auf das Objekt projiziert wird zur das Verfahren stützenden Identifikation zweier entsprechender Bildpunkte und/oder zum Kalibrieren einer für das Verfahren verwendeten Vorrichtung.

11. Verfahren nach einem der Ansprüche 7 bis 10, **dadurch gekennzeichnet, dass** durch Interpolation eine subpixelgenaue Zuordnung von Bildpunkten zu Phasenwerten erfolgt.

12. Verfahren nach einem der Ansprüche 7 bis 11, **dadurch gekennzeichnet, dass** es sich bei dem Objekt um Zähne, Zahnmodelle oder Zahnersatz handelt.

13. Verwendung einer Vorrichtung nach einem der Ansprüche 1 bis 6 zur Durchführung eines Verfahrens nach einem der Ansprüche 7 bis 12.

## Claims

1. Device for the contactless detection of a three-dimensional contour, comprising a projector with an image-producing element (1) and a projection lens (2) for imaging a stripe pattern which can be generated on the image-producing element (1) in an object space (3) and also a camera arrangement which includes two camera lenses (4) for observing the object space (3) from two different directions, the projector and the camera arrangement being accommodated together in one measuring head which can be used as a hand-held device, **characterised in that** the camera arrangement has a common camera chip (5) for both camera lenses (4), each of the camera lenses (4) producing an image on respectively one half of the camera chip (5), wherein respectively at least two tilted elements (6, 6') are disposed in a beam path of each of the two camera lenses (4), all the lenses of the camera lenses (4) being disposed on the object side of these tilted elements (6, 6') and at least one first tilted element (6) of the tilted elements (6, 6') out of the beam path of each of the two camera lenses (4) being disposed on a displaceable slide for adjustment.

2. Device according to claim 1, **characterised in that** the two camera lenses (4) have optical axes which enclose an angle of between 5° and 20°.

3. Device according to one of the claims 1 or 2, **characterised in that** the camera lenses (4) and/or the projection lens (2) is designed for an object-side sectional width of between 7 cm and 13 cm.

4. Device according to one of the claims 1 to 3, **characterised in that** a light source is provided for the projector, light emanating from this light source being able to be modulated in intensity by the image-producing element (1) which is configured to be transmissive or reflective.

5. Device according to claim 4, **characterised in that** the light source is accommodated in the measuring head or connected via a light guide (10) to the measuring head.

6. Device according to one of the claims 1 to 5, **characterised in that** the device includes in addition a control and evaluation unit for actuating the image-producing element (1) and for evaluating image data produced by the camera arrangement,
the control and evaluation unit being installed with programming technology
- in order to generate at least one stripe pattern on the image-producing element (1), and also
- in order to evaluate a course of phase values determined with the camera arrangement along mutually corresponding epipolar lines in image planes of both camera lenses (4) with respect to constancy,
- in order to divide the epipolar lines into intervals of a constant phase course,
- in order to identify mutually corresponding intervals in the mutually corresponding epipolar lines,
- in order to identify mutually corresponding image points of the same phase values within the intervals identified as correlating with each other, and
- in order to triangulate an object point based on the identified image points which correspond to this object point and correlate with each other.

7. Method for the contactless detection of a three-dimensional contour in which at least one stripe pattern is projected onto an object and, by means of two camera lenses (4) of a camera arrangement which are disposed at a defined spacing relative to each other, two images of the object with the stripe pattern projected thereon are recorded from two different directions, wherein the camera arrangement has a common camera chip (5) for both camera lenses (4), each of the camera lenses (4) producing an image on respectively one half of the camera chip (5), wherein respectively at least two tilted elements (6, 6') are disposed in a beam path of each of the two camera lenses (4), all the lenses of the camera lenses (4) being disposed on the object side of these tilted elements (6, 6') and at least one first tilted element (6) of the tilted elements (6, 6') out of the beam path of each of the two camera lenses (4) being disposed on a displaceable slide for adjustment and being displaced by means of this slide for adjustment, wherein phase values of the stripe pattern are determined for image points in both images, after which, by means of triangulation based on respectively mutually corresponding image points in the two images, depth information for an object point corresponding to these image points is determined,
wherein, in order to determine the mutually corresponding image points in the two images,
- pairs of respectively mutually corresponding epipolar lines in the two images are selected,
- the determined phase values along the epipolar lines are evaluated with respect to constancy and
- the epipolar lines are hence divided into intervals of a constant phase course,
- after which mutually corresponding intervals in the mutually corresponding epipolar lines are identified and, within the mutually corresponding intervals, points of the same phase values are mutually assigned.

8. Method according to claim 7, **characterised in that** a sequence of a plurality of mutually phase-shifted stripe patterns is projected in succession onto the object and recorded for determining the phase values.

9. Method according to one of the claims 7 or 8, **characterised in that** at least one further stripe pattern with differently orientated stripes is projected onto the object in a temporally offset manner, phase values also of this further stripe pattern being evaluated in order to identify mutually corresponding image points in the two images.

10. Method according to one of the claims 7 to 9, **characterised in that** at least one recording of the object is made my means of the two camera lenses, in the case of which at least one marking which is located in a defined manner relative to the simultaneously, previously or subsequently recorded stripe pattern is projected onto the object for identification of two corresponding image points, which assists the method, and/or for calibration of a device used for the method.

11. Method according to one of the claims 7 to 10, **characterised in that** a subpixel-precise assignment of image points to phase values is effected by means of interpolation.

12. Method according to one of the claims 7 to 11, **characterised in that** the object concerns teeth, tooth models or dentures.

13. Use of a device according to one of the claims 1 to 6 for implementing a method according to one of the claims 7 to 12.

## Revendications

1. Dispositif de mesure sans contact d'un contour tridimensionnel, comprenant un projecteur avec un élément générateur d'image (1) et un objectif de projection (2) pour la reproduction d'un motif à bandes pouvant être généré sur l'élément générateur d'images (1) dans un espace d'objet (3) ainsi qu'un dispositif de caméra comprenant deux objectifs de caméras (4) pour l'observation de l'espace d'objet (3) dans deux directions différentes, le projecteur et le dispositif de caméra étant logés ensemble dans une tête de mesure pouvant être utilisée en tant qu'appareil portatif, **caractérisé en ce que** le dispositif de caméra comprend une puce de caméra (5) commune pour les deux objectifs de caméras (4), chacun des objectifs de caméras (4) générant une image sur une moitié de la puce de caméra (5), au moins deux éléments de déviation (6, 6') étant disposés dans un trajet de faisceau de chacun des deux objectifs de caméras (4), toutes les lentilles des objectifs de caméras (4) étant situées du côté objet de ces éléments de déviation (6, 6') et au moins un premier élément de déviation (6) des éléments de déviation (6, 6') du trajet de faisceau de chacun des deux objectifs de caméras (4) étant disposé pour l'ajustement sur un chariot coulissant.

2. Dispositif selon la revendication 1, **caractérisé en ce que** les deux objectifs de caméras (4) ont des axes optiques formant un angle entre 5° et 20°.

3. Dispositif selon l'une des revendications 1 ou 2, **caractérisé en ce que** les objectifs de caméras (4) et/ou l'objectif de projection (2) est conçu pour une largeur de coupe côté objet entre 7 cm et 13 cm.

4. Dispositif selon l'une des revendications 1 à 3, **caractérisé en ce qu'**une source de lumière est prévue pour le projecteur, la lumière sortant de cette source de lumière pouvant être modulée en intensité par l'élément générateur d'images (1) conçu de manière transmissive ou réfléchissante.

5. Dispositif selon la revendication 4, **caractérisé en ce que** la source de lumière est logée dans la tête de mesure ou est reliée avec la tête de mesure par l'intermédiaire d'une fibre optique (10).

6. Dispositif selon l'une des revendications 1 à 5, **caractérisé en ce que** le dispositif comprend en outre une unité de commande et d'analyse pour la commande de l'élément générateur d'images (1) et pour l'analyse des données d'images générées par le dispositif à caméras,
l'unité de commande et d'analyse étant conçue de façon à être programmable
- pour la génération d'au moins un motif à bandes sur l'élément générateur d'images (1) ainsi que
- pour l'évaluation d'un tracé de valeurs de phases déterminées avec le dispositif à caméras le long de lignes épipolaires correspondant entre elles dans les plans d'images des deux objectifs de caméras (4) en ce qui concerne la continuité,
- pour la division des lignes épipolaires en intervalles d'un tracé de phase continu,
- pour l'identification d'intervalles correspondant entre eux dans les lignes épipolaires correspondant entre elles,
- pour l'identification de points d'images correspondant entre eux de valeurs de phase égales à l'intérieur des intervalles identifiés corrélés entre eux et
- pour la triangulation d'un point d'objet sur la base des points d'images identifiés corrélés entre eux correspondant à ce point d'objet.

7. Procédé de mesure sans contact d'un contour tridimensionnel, dans lequel au moins un motif à bande est projeté sur un objet et, à l'aide de deux objectifs de caméras (4) disposés à une distance déterminée entre eux d'un dispositif à caméras, deux images de l'objet avec le motif à bandes projeté sont prises de deux directions différentes, le dispositif à caméras comprenant une puce de caméra (5) commune pour les deux objectifs de caméras (4), chacun des objectifs de caméras (4) générant une image sur une moitié de la puce de caméra (5), au moins deux éléments de déviation (6, 6') étant disposés dans un trajet de faisceau de chacun des deux objectifs de caméras (4), toutes les lentilles des objectifs de caméras (4) étant situées du côté objet de ces éléments de déviation (6, 6') et au moins un premier élément de déviation (6) des éléments de déviation (6, 6') du trajet de faisceau de chacun des deux objectifs de caméras (4) étant disposé pour l'ajustement sur un chariot coulissant et est coulissé à l'aide de ce chariot pour l'ajustement, des valeurs de phase du motif à bandes étant déterminées pour des points d'images dans les deux images, une information de profondeur pour un point d'objet correspondant à ces points d'images étant déterminée par triangulation sur la base de points d'images correspondant entre eux dans les deux images,
pour la détermination des points d'images correspondant entre eux dans les deux images :
- des paires de lignes épipolaires correspondant entre elles étant sélectionnées dans les deux images,
- les valeurs de phases déterminées étant évaluées le long des lignes épipolaires en ce qui concerne leur continuité et
- les lignes épipolaires étant ainsi divisées en intervalles d'un tracé de phase continu,
- les intervalles correspondant entre eux étant ensuite identifiés dans les lignes épipolaires correspondant entre elles et les points de mêmes valeurs de phases étant attribués entre eux à l'intérieur des intervalles correspondant entre eux.

8. Procédé selon la revendication 7, **caractérisé en ce qu'**une suite de plusieurs motifs à bandes présentant un décalage de phase entre eux sont projetés les uns après les autres sur l'objet et sont enregistrés pour la détermination des valeurs de phases.

9. Procédé selon l'une des revendications 7 ou 8, **caractérisé en ce que**, avec un décalage temporel, au moins un autre motif à bandes est projeté avec des bandes orientées différemment sur l'objet, des valeurs de phases de cet autre motif à bande étant également analysées pour l'identification de points d'images correspondant entre eux dans les deux images.

10. Procédé selon l'une des revendications 7 à 9, **caractérisé en ce qu'**au moins une prise de vue de l'objet est réalisée à l'aide des deux objectifs de caméras, dans laquelle au moins un marquage localisé de manière définie par rapport au motif à bandes enregistré simultanément, avant ou après est projeté sur l'objet pour l'identification, soutenant le procédé, de deux points d'images correspondants et/ou pour l'étalonnage d'un dispositif utilisé pour le procédé.

11. Procédé selon l'une des revendications 7 à 10, **caractérisé en ce qu'**une attribution précise au sous-pixel près des points d'images aux valeurs de phases est effectuée par interpolation.

12. Procédé selon l'une des revendications 7 à 11, **caractérisé en ce que** l'objet est un ensemble de dents, des modèles de dents ou une prothèse dentaire.

13. Utilisation d'un dispositif selon l'une des revendications 1 à 6 pour la réalisation d'un procédé selon l'une des revendications 7 à 12.
